# EUROPEAN PATENT SPECIFICATION

(11) **EP 1 522 511 B1**
(45) Date of publication and mention of the grant of the patent: **22.11.2006**
(21) Application number: 04077632.0
(22) Date of filing: 22.09.2004
(51) Int. Cl.: B65G 65/00, B65G 47/244

(54) **An apparatus for in-feeding and removing trucks for tiles to and from loading and unloading machines**
Vorrichtung zum Zuführen und Entfernen der Wagen von Fliesen zu/von Lade- und Entlademaschine
Dispositif de chargement et d'extraction de camions des tuiles vers les/des machines du chargement et déchargement

(30) Priority: 07.10.2003 IT MO20030274
(43) Date of publication of application: 13.04.2005
(73) Proprietor: Kemac S.p.A., 41042 Fiorano Modenese (Modena) (IT)
(72) Inventor: Laroma Iezzi, Mario, 42013 Casalgrande (RE) (IT)
(74) Representative: Gotra, Stefano

(56) References cited:
- US-A- 2 986 262
- US-A- 3 679 043
- US-A- 4 015 702
- US-A- 5 240 102

## Description

The invention relates to an apparatus used for loading and unloading single trucks located at a predetermined position with respect to a loading-unloading machine, according to the preamble of claim 1.

In the ceramic industry a truck is basically a shelf rack, provided with a plurality of parallel planes on rollers on which tiles are piled at the end of various work stages; the truck is transferred from one machine or work station to another, and is in effect a vector for the tiles. Each work machine or station in a work cycle is equipped with a loading/unloading machine which transfers the tiles from the trucks to the work station, and vice versa. The apparatus of the invention can be used to feed in and extract the trucks from the loading and unloading machines. Spherical roller conveyors for handling heavy palletized loads are disclosed in US-A-3679043.

Apparatus for feeding and removing tile trucks to and from tile loading/unloading machines generally comprise a roller transport plane on which the trucks are deposited. In order for the loading/unloading machine to work correctly on the trucks, the trucks have to be fed into the machine at a precise orientation, in particular with respect to a transversal axis to the movement of the roller plane, and also with respect to a vertical axis of the plane. In known-type machines means for correctly orienting the trucks are not provided, and the trucks are either loaded on tracks by automatic shuttles or, in the case of non-automatic plants, the trucks are manually oriented by means of fork trucks. In this eventuality, the truck operator is responsible for the correct positioning of the trucks, which is done by manoeuvring the vehicle in relation to the roller plane. The is generally, at the loading section, a vertical striker surface against which the truck is positioned by the fork truck and thus achieves the correct orientation.

Positioning operations of this type comprise several drawbacks.

Firstly, the operation is decidedly slow, inasmuch as the fork truck operator is forced to limit the speed of the manoeuvre in order correctly to park the truck on the loading section of the roller plane.

Furthermore, positioning using reference striker surfaces leads to impacts and vibrations which can change the arrangement of the tiles on the truck, which may lead to tile damage.

The main aim of the present invention is to provide an apparatus for in-feeding and removing tile trucks to and from loading/unloading machines which obviates the drawbacks in the prior art. The present invention is defined in claim 1.

An advantage of the present invention is that it enables a correct positioning of a truck without any need for a special positioning or arrangement of the truck itself on the loading section of the transport plane.

A further advantage of the invention is that a correct positioning of a truck does not require the use, in the depositing zone, of reference surfaces against which the tile truck has to be positioned.

Further characteristics and advantages will better emerge from the detailed description that follows of an apparatus for in-feeding and removing tile trucks to and from loading/unloading machines, made with reference to the accompanying figures of the drawings, here provided by way of non-limiting example, and in which:

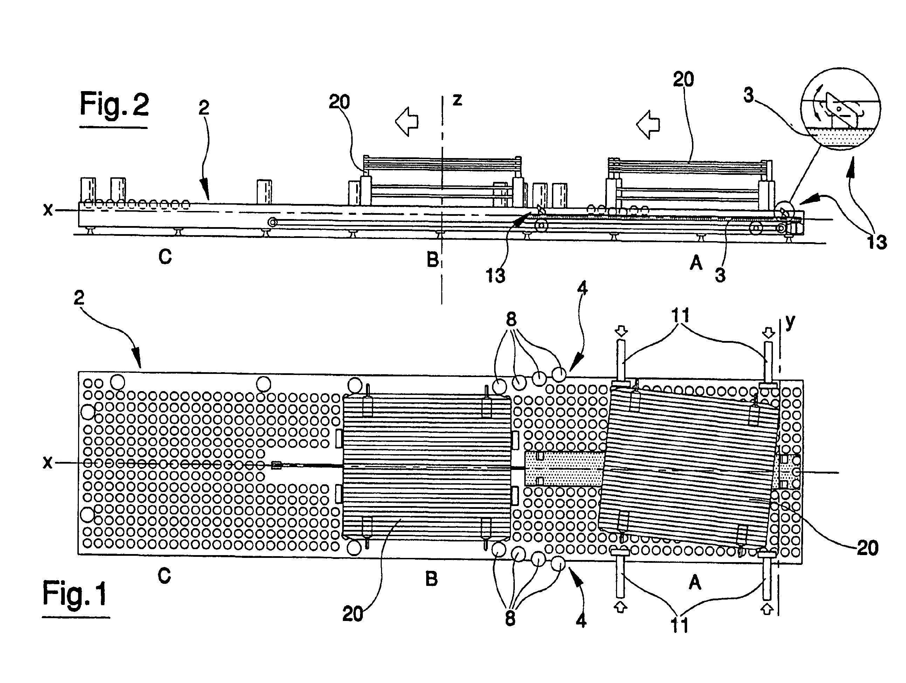

figure 1 is a schematic plan view from above;

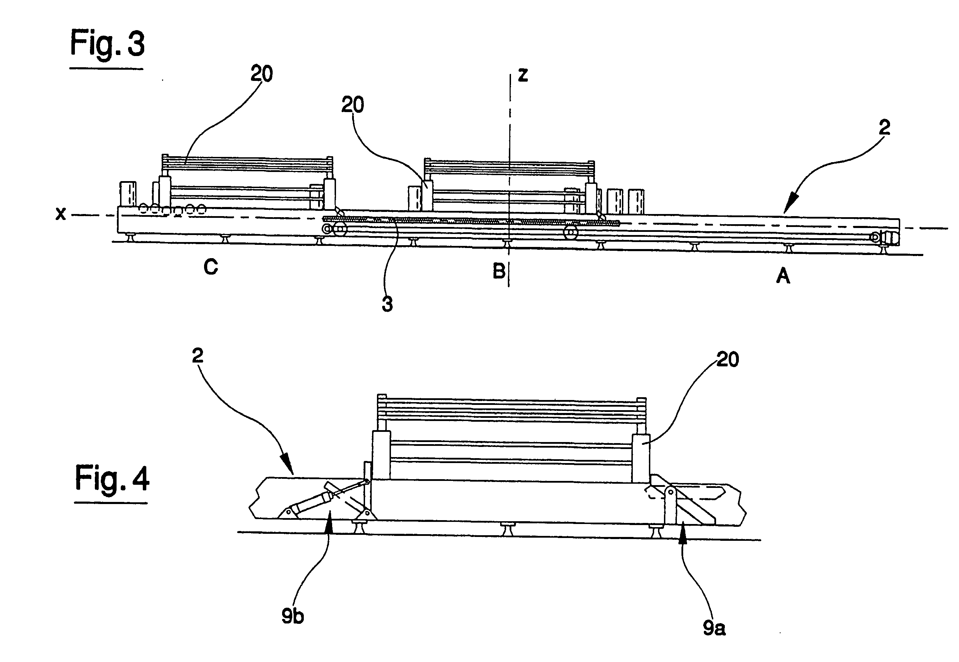

figures 2 and 3 are two views in vertical elevation relating to two different operative configurations;
figure 4 is a detail of figure 3.

The figures of the drawings relate to an apparatus for in-feeding and removing tile trucks to and from loading/unloading machines according to the present invention. It comprises a transport plane composed of balls 2, for supporting and removing at least one truck 20, as well as for moving the truck 20. The apparatus further comprises a motor 3, for moving the truck 20 along a longitudinal direction x, longitudinal reference means, predisposed for a positioning of the truck 20 along the longitudinal direction x, and transversal guide means 4, predisposed for positioning the truck 20 in a transversal direction y which is not parallel to the longitudinal direction x and for orienting the truck 20 about a vertical axis z.

The ball transport plane 2 develops in the longitudinal direction x and comprises a first load section A for receiving and supporting at least one truck 20 arranged with any orientation with respect to a vertical axis z, an unloading section C from which the truck 20 can be removed, and a work section B, intermediate with respect to sections A and C, on which the tiles are loaded and unloaded to and from the truck 20. When in the work section B, the truck 20 is in proximity of the tile loading/unloading machine and interacts with a mobile arm bearing a plurality of chucks predisposed to connect kinematically with the rollers defining the planes of the truck 20. The mobile arm is arranged laterally to the truck 20, which is positioned correctly, as will be better described herein below, by means of longitudinal reference means and the transversal guide means 4. With a displacement in a parallel direction to the longitudinal direction x the chucks supported by the mobile arm can insert into the rollers of the truck 20 and rotate the rollers. Thus the tiles are transferred, either to be loaded or unloaded, with respect to the truck 20.

The transversal guide means 4 are passive and comprise a vertical-axis plurality of rollers 8 projecting at least partially above the ball transport plane 2. The rollers 8 are arranged over at least a portion of two longitudinal sides of the ball transport plane 2 between the loading section A and the work section B, and are separated, in a parallel direction to the transversal direction y, by a decreasing distance along the longitudinal direction x in a direction of movement of the truck 20, from the loading section a to the unloading section C.

The rollers 8 of the transversal guide means 4 define a funnel-shaped tract along the pathway followed by the truck 20 on the ball transport plane 2. The function of this funnel-shaped tract is to guarantee a correct positioning of the truck 20 in a parallel direction to the transversal direction y and about the vertical axis z.

The truck 20 is deposited on the loading section A in no precise orientation, for example by manually-operated fork trucks. From the loading section A, the truck then translates towards the work section B, pushed by pushing organs 13 activated by a motor 3.

Preferably there are two pushing organs 13 arranged at a reciprocal distance along the longitudinal direction x, so that when one of the two pushing organs 13 interacts with a truck 20 deposited in the loading section A, the other of the two pushing organs 13 interacts with a truck 20 positioned in the work section B.

While translating from the loading section A to the work section B, the truck 20 enters into contact with the rollers 8. As it is supported on a ball transport plane, the truck 20 is mobile with respect to the ball transport plane in both a longitudinal direction x, and in transversal direction y. Bumping and/or sliding against the rollers 8, the truck rotates about the vertical axis z and translates along the transversal direction y, arranging itself in a predetermined position according to the arrangement of the rollers 8.

The longitudinal reference means comprise at least two reference elements 9a and 9b, located on opposite sides of the work section B. One of the elements 9a is in a fixed position and swings freely in order to act only upon movements of the truck 20 going in an opposite direction to the advancement direction from the loading section A to the work section B. The second of the reference elements 9b is pneumatically activated on command to push the truck 20 against the first of the reference elements 9a. Thus, in the work position B the truck 20 is blocked with respect to the longitudinal direction, as it is held and gripped between the two reference elements 9a and 9b; and it is in this position that the loading and unloading of the tiles from the truck 20 takes place.

At the moment when the truck 20 is removed from the work section B, the reference element 9b is lowered below the ball transport plane 2 and the motor 3, via the pushing organs 13, moves the truck towards the unloading section C.

The ball transport plane 2 further comprises means for pre-orienting, arranged at the loading section A, which are predisposed at least partially to position the newly-loaded truck 20 with respect to the vertical axis z. The means for pre-orienting can comprise four hydraulic cylinders 11, arranged in pairs on opposite sides to the axis x, operating in a parallel direction to the transversal direction y and mobile between a ready position, in which they are not in contact with the truck 20, and a work position, in which they are in contact with the truck 20. The hydraulic cylinders 11 are arranged in such a way that the lateral pressure they exert on the truck 20 causes a rotation of the truck 20 about the vertical axis z. In particular, the hydraulic cylinders 11 are arranged at the comers of a rectangle which is symmetrical with respect to the longitudinal direction x.

The apparatus for in-feeding and removing tile trucks to and from loading/unloading machines according to the present invention offers important advantages. Firstly it functions simply and precisely and adapts to any type of loading/unloading machine. It correctly positions trucks without any need for the trucks to be loaded with any initial orientation, freeing fork truck operators from any need to "park" the fork truck in any special way; this makes the movement of the tile trucks much more rapid. Also, the tile truck is positioned with no awkward direct contact with surfaces or other reference means on the part of the fork truck, which prevents bumping and scraping of the tile truck and of the tiles arranged thereon.

## Claims

1. An apparatus for in-feeding and removing tile trucks to and from loading/unloading machines where single tile trucks located in a predetermined position with respect to a loading/unloading machine are loaded and unloaded, the apparatus comprises a ball transport plane (2) for bearing and receiving at least one tile truck (20), and for moving the tile truck (2); a motor (3) predisposed for moving the tile truck (20) along a horizontal longitudinal direction (x); **characterised in that** said apparatus comprises longitudinal reference means (9a, 9b) predisposed for positioning the tile truck (20) along the longitudinal direction (x); a transversal guide (4) predisposed for positioning the tile truck (20) along a transversal direction (y) which is not parallel to the longitudinal direction (x) and for orienting the tile truck (20) about a vertical axis (z).

2. The apparatus of claim 1, **characterised in tha**t the ball transport plane (2) develops along the longitudinal direction (x) and comprises a loading section (A), for receiving at least one tile truck (20) arranged at any orientation with respect to a vertical axis (z), an unloading section (C) from which the tile truck (20) can be removed, and a work section (B), intermediate of the loading section (A) and the unloading section (C), at which work section (B) tiles are loaded or unloaded onto or from the tile truck (20).

3. The apparatus of claim 1, **characterised in that** the transversal guide (4) is passive and comprises a plurality of vertical-axis rollers (8) which at least partially project above the ball transport plane (2), the rollers (8) being arranged along at least a portion of two longitudinal sides of the ball transport plane (2) between the loading section (A) and the work section (B), the rollers (8) being separated in a parallel direction to the transversal direction (y) by decreasing distances along the longitudinal direction (x) in a direction in which the tile truck (20) is moving, from the loading section (A) to the unloading section (C).

4. The apparatus of claim 1, **characterised in that** the longitudinal reference means comprise at least two reference elements (9a, 9b), located on opposite sides of the work section (B); a first reference element (9a) of the at least two reference elements (9a, 9b) being in a fixed position and being able to tilt freely in order to act only upon displacements of the tile truck (20) which displacements are in an opposite direction to an advancement direction of the tile truck (20) from the loading section (A) to the work section (B); a second reference element (9b) of the at least two reference elements (9a, 9b) being pneumatically activated on command in order to push the tile truck (20) against the first reference element (9a) in order to block the tile truck (20) in the work section (B).

5. The apparatus of claim 2, **characterised in that** the ball transport plane (2) comprises means for pre-orienting, arranged at the loading section (A), predisposed for at least partially orienting the tile truck (20) with respect to the vertical axis (z) when the tile truck (20) is deposited in the loading section (A), the means for pre-orienting comprising four hydraulic cylinders (11) arranged in pairs on opposite sides with respect to the longitudinal direction (x), and operating in a parallel direction to the transversal direction (y), and being mobile between a ready position in which there is no contact with the tile truck (20) and an operative position, in which there is contact with the tile truck (20).

## Patentansprüche

1. Vorrichtung zum Zuführen und Entfernen von Fliesenwagen zu und von Lade-/Entlademaschinen, wo die einzelnen Fliesenwagen in einer bestimmten Position im Verhältnis zu einer Lade-/ Entlade maschine beladen und entladen werden, die Vorrichtung eine Kugeltransportfläche (2) zum Tragen und Aufnehmen von wenigstens einem Fliesenwagen (20) sowie zum Bewegen des Fliesenwagens (20) enthält; ein Motor (3) zum Bewegen des Fliesenwagens (20) entlang einer horizontalen, längsverlaufenden Richtung (x) vorgesehen ist; **dadurch gekennzeichnet, dass** die genannte Vorrichtung längsverlaufende Bezugsmittel (9a, 9b) enthält, vorgesehen zur Positionierung des Fliesenwagens (20) entlang der längsverlaufenden Richtung (x); und eine Querführung (4), vorgesehen zur Positionierung des Fliesenwagens (20) entlang einer querverlaufenden Richtung (y), welche nicht parallel zu der längsverlaufenden Richtung (x) ist, und zur Orientierung des Fliesenwagens (20) um eine vertikale Achse (z).

2. Vorrichtung nach Patentanspruch 1, **dadurch gekennzeichnet, dass** sich die Kugeltransportfläche (2) entlang der längsverlaufenden Richtung (x) erstreckt und einen Ladeabschnitt (A) zur Aufnahme von wenigstens einem Fliesenwagen (20) enthält, der in einer zufälligen Ausrichtung im Verhältnis zu einer vertikalen Achse (z) angeordnet ist, einen Entladeabschnitt (C), von welchem der Fliesenwagen (20) entfernt werden kann, und einen Arbeitsabschnitt (B) zwischen dem Ladeabschnitt (A) und dem Entladeabschnitt (C), in welchem Arbeitsabschnitt (B) die Fliesen auf den Fliesenwagen (20) geladen oder von diesem entladen werden.

3. Vorrichtung nach Patentanspruch 1, **dadurch gekennzeichnet, dass** die Querführung (4) passiv ist und eine Anzahl von Rollen (8) mit vertikaler Achse enthält, welche wenigstens teilweise über die Kugeltransportfläche (2) hervorstehen, wobei die Rollen (8) entlang von wenigstens einem Abschnitt der beiden längsverlaufenden Seiten der Kugeltransportfläche (2) zwischen dem Ladeabschnitt (A) und dem Arbeitsabschnitt (B) angeordnet sind, und wobei die Rollen (8) in einer Richtung parallel zu der querverlaufenden Richtung (y) um abnehmende Abstände entlang der längsverlaufenden Richtung (x) voneinander getrennt sind, und zwar in einer Richtung, in welcher sich der Fliesenwagen (20) von dem Ladeabschnitt (A) zu dem Entladeabschnitt (C) bewegt.

4. Vorrichtung nach Patentanspruch 1, **dadurch gekennzeichnet, dass** die längsverlaufenden Bezugsmittel wenigstens zwei Bezugselemente (9a, 9b) enthalten, angeordnet an den entgegengesetzten Seiten des Arbeitsabschnittes (B); wobei ein erstes Bezugselement (9a) der wenigstens zwei Bezugselemente (9a, 9b) in einer feststehenden Position angeordnet und in der Lage ist, frei zu kippen, um nur auf die Verschiebungen des Fliesenwagens (20) zu wirken, welche in der entgegengesetzten Richtung zu einer Vorschubrichtung des Fliesenwagens (20) von dem Ladeabschnitt (A) zu dem Arbeitsabschnitt (B) erfolgen; wobei ein zweites Bezugselement (9b) der wenigstens zwei Bezugselemente (9a, 9b) auf einen Befehl hin pneumatisch aktiviert wird, um den Fliesenwagen (20) gegen das erste Bezugselement (9a) zu schieben, um den Fliesenwagen (20) in dem Arbeitsabschnitt (B) zu blockieren.

5. Vorrichtung nach Patentanspruch 2, **dadurch gekennzeichnet, dass** die Kugeltransportfläche (2) Mittel zur Vororientierung enthält, angeordnet in dem Ladeabschnitt (A) und vorgesehen zur wenigstens teilweisen Orientierung des Fliesenwagens (20) im Verhältnis zu der vertikalen Achse (z), wenn der Fliesenwagen (20) in dem Ladeabschnitt (A) abgestellt ist, wobei die Mittel zur Vororientierung vier Hydraulikzylinder (11) enthalten, angeordnet paarweise auf sich gegenüberliegenden Seiten im Verhältnis zu der längsverlaufenden Richtung (x) und in einer parallelen Richtung zu der querverlaufenden Richtung (y) arbeitend, und wobei sie beweglich sind zwischen einer Warteposition, in welcher sie sich nicht im Kontakt mit dem Fliesenwagen (20) befinden, und einer Betriebsposition, in welcher sie sich mit dem Fliesenwagen (20) im Kontakt befinden.

## Revendications

1. Dispositif de chargement et d'extraction de camions de tuiles vers et des machines de chargement/déchargement en correspondance desquelles les camions de tuiles disposés dans une position prédéterminée par rapport à une machine de chargement/déchargement sont chargés et déchargés, le dispositif comprenant un plan de transport à sphères (2) pour supporter et recevoir au moins un camion de tuiles (20), et pour déplacer ce dernier; un moteur (3) prédisposé pour déplacer le camion de tuiles (20) le long d'une direction longitudinale horizontale (x); **caractérisé en ce que** ledit dispositif comprend des moyens de référence longitudinaux (9a, 9b) prédisposés pour positionner le camion de tuiles (20) le long de la direction longitudinale (x); un guide transversal (4) prédisposé pour positionner le camion de tuiles (20) le long d'une direction transversale (y) qui n'est pas parallèle à la direction longitudinale (x) et pour orienter le camion de tuiles (20) autour d'un axe vertical (z).

2. Dispositif selon la revendication 1, **caractérisé en ce que** le plan de transport à sphères (2) se développe le long de la direction longitudinale (x) et comprend une section de chargement (A), pour recevoir au moins un camion de tuiles (20) disposé dans n'importe quelle orientation par rapport à l'axe vertical (z), une section de déchargement (C) de laquelle le camion de tuiles (20) peut être prélevé, et une section de travail (B), intermédiaire de la section de chargement (A) et de la section de déchargement (C), dans laquelle les tuiles sont chargées ou déchargées sur ou du camion de tuiles (20).

3. Dispositif selon la revendication 1, **caractérisé en ce que** le guide transversal (4) est passif et comprend une pluralité de rouleaux à axe vertical (8) qui sont au moins partiellement saillants au-dessus du plan de transport à sphères (2), les rouleaux (8) étant disposés le long d'au moins une partie de deux côtés longitudinaux du plan de transport à sphères (2) entre la section de chargement (A) et la section de travail (B), les rouleaux (8) étant séparés dans une direction parallèle à la direction transversale (y) par des distances décroissantes le long de la direction longitudinale (x) dans une direction dans laquelle le camion de tuiles (20) se déplace, de la section de chargement (A) à la section de déchargement (B).

4. Dispositif selon la revendication 1, **caractérisé en ce que** les moyens de référence longitudinaux comprennent au moins deux éléments de référence (9a, 9b), disposés sur des côtés opposés de la section de travail (B); un premier élément de référence (9a) des au moins deux éléments de référence (9a, 9b) étant dans une position fixe et pouvant s'incliner librement de manière à agir seulement sur les déplacements du camion de tuiles (20), lesquels déplacements s'effectuent dans une direction opposée à une direction d'avancée du camion de tuiles (20) de la section de chargement (A) à la section de travail (B); un second élément de référence (9b) des au moins deux éléments de référence (9a, 9b) étant pneumatiquement activé sur commande de manière à pousser le camion de tuiles (20) contre le premier élément de référence (9a) de manière à bloquer le camion de tuiles (20) dans la section de travail (B).

5. Dispositif selon la revendication 2, **caractérisé en ce que** le plan de transport à sphères (2) comprend des moyens de pré-orientation, disposés en correspondance de la section de chargement (A), prédisposés pour au moins partiellement orienter le camion de tuiles (20) par rapport à l'axe vertical (z) lorsque le camion de tuiles (20) est disposé dans la section de chargement (A), les moyens de pré-orientation comprenant quatre vérins hydrauliques (11) disposés par paires sur des côtés opposés par rapport à la direction longitudinale (x), et opérant dans une direction parallèle à la direction transversale (y), et étant mobiles entre une position d'attente, dans laquelle il n'y a aucun contact avec le camion de tuiles (20), et une position opérationnelle, dans laquelle il y a un contact avec le camion de tuiles (20).
